# EUROPÄISCHE PATENTSCHRIFT

(11) **EP 2 594 364 B1**
(45) Veröffentlichungstag und Bekanntmachung des Hinweises auf die Patenterteilung: **04.06.2014**
(21) Anmeldenummer: 11189091.9
(22) Anmeldetag: 15.11.2011
(51) Int. Cl.: B24B 23/02, B24B 23/04, B27B 19/00, B23D 61/00

(54) **Oszillationsantrieb**
Oscillation drive
Dispositif d'entraînement oscillant

(43) Veröffentlichungstag der Anmeldung: 22.05.2013
(73) Patentinhaber: C. & E. Fein GmbH, 73529 Schwäbisch Gmünd-Bargau (DE)
(72) Erfinder: Weber, Heinrich, 73527 Schwäbisch Gmünd (DE)
(74) Vertreter: Witte, Weller & Partner Patentanwälte mbB

(56) Entgegenhaltungen:
- EP-A2- 1 358 965
- US-A- 5 482 499

## Beschreibung

Die Erfindung betrifft einen Oszillationsantrieb mit einem Gehäuse mit einem Getriebekopf, mit einer um ihre Längsachse rotatorisch antreibbaren Antriebswelle, die mit einer Werkzeugspindel zu deren Antrieb koppelbar ist, wobei der Antriebswelle und der Werkzeugspindel ein erster und ein zweiter Exzenterkoppelmechanismus zwischengeschaltet sind, die mit voneinander versetzten Exzenterabschnitten der Antriebswelle zusammenwirken.

Oszillationsantriebe allgemeiner Art, die jeweils lediglich einen Exzenterkoppelmechanismus aufweisen, sind beispielsweise aus der EP 1 358 965 A2 und der US 5,482,499 A1 bekannt.

Aus der US 2,392,097 A1 ist eine Bohrmaschine mit Mitteln zur Drehrichtungsumkehr bekannt, die zwei Exzenterkoppelmechanismen aufweist. Die bekannte Bohrmaschine weist eine drehbare Werkzeugspindel auf, die durch einen unidirektionalen Motor angetrieben ist. Es ist ferner ein Antriebsumkehrmittel vorgesehen, um die Werkzeugspindel vorwärts und rückwärts antreiben zu können. Das Antriebsumkehrmittel weist zumindest einen Ratschenmechanismus auf, der durch den Motor in eine Oszillationsbewegung versetzt werden kann. Dem Ratschenmechanismus sind zumindest zwei einander entgegengerichtet angeordnete Klinken zugeordnet, die jeweils mit dem Ratschenmechanismus zusammenwirken können, um die Werkzeugspindel entweder in einer ersten (Dreh-) Richtung oder alternativ in einer dieser gegengerichteten zweiten (Dreh-) Richtung anzutreiben.

Auf diese Weise kann grundsätzlich ein Rückwärtsgang realisiert werden, ohne einen umkehrbaren Motor zu benötigen. Ein solcher Rückwärtsgang kann insbesondere das Lösen eines festsitzenden oder festgeklemmten Bohrers vereinfachen.

Zur Realisierung der Bewegungsumkehrfunktion, also des Rückwärtsgangs, sieht die Bohrmaschine der US 2,392,097 A1 eine komplexe, aufwändige und raumbeanspruchende Mechanik vor. Es ist schon seit längerer Zeit üblich geworden, derartige (Dreh-) Richtungsumkehrfunktionen über die Ansteuerung eines verbauten Motors, etwa eines Elektromotors, zu realisieren.

Aus der WO 95/17991 A2 ist eine Werkzeugmaschine bekannt, die eine Werkzeugantriebswelle aufweist, die über einen exzentrisch an dieser gelagerten Schwinghebel auf eine Abtriebswelle einwirkt, um eine intermittierende Drehbewegung zu erzeugen, die sich insbesondere zum Schrauben eignet. Zwischen dem Schwinghebel und der Abtriebswelle ist ferner zumindest eine Freilaufkupplung vorgesehen, die dazu ausgebildet ist, abhängig von der Bewegungsrichtung des Schwenkhebels dessen Bewegung auf Abtriebswelle zu übertragen oder aber eine Übertragung der Bewegung auf die Abtriebswelle zu unterbinden.

Auf diese Weise kann grundsätzlich eine intermittierende (Dreh-) Bewegung der Abtriebswelle bewirkt werden. Jedoch verbleibt bei dieser Bewegungscharakteristik ein beträchtlicher Anteil der Antriebsleistung ungenutzt und kann etwa nicht auf ein Werkstück einwirken.

Die Erfindung betrifft generell Oszillationsantriebe, insbesondere kraftgetriebene Werkzeuge oder Handwerkzeuge, bei denen eine im Regelfall rotatorische Antriebsbewegung in eine hochfrequente drehoszillatorische Abtriebsbewegung überführt wird, mit der etwa Sägewerkzeuge, Schleifwerkzeuge oder Ähnliches angetrieben werden können.

Der Erfindung liegt die Aufgabe zugrunde, einen Oszillationsantrieb zum Antrieb eines Werkzeugs anzugeben, der in einem erweiterten Einsatzbereich Verwendung finden kann, neue Anwendungsmöglichkeiten erlauben kann und möglichst bei einer kompakten Bauweise eine einfache und sichere Handhabung gewährleisten kann.

Diese Aufgabe wird bei einem Oszillationsantrieb gemäß der eingangs genannten Art erfindungsgemäß dadurch gelöst, dass der erste und der zweite Exzenterkoppelmechanismus dazu ausgebildet sind, die Werkzeugspindel zum Antrieb eines Werkzeugs um ihre Spindelachse periodisch hin und her schwenkend mit richtungsabhängiger Auslenkung anzutreiben, dass der erste und der zweite Exzenterkoppelmechanismus dazu ausgebildet sind, beim Umlauf der Antriebswelle die Werkzeugspindel mit einer Schrittcharakteristik anzutreiben, und dass zur selektiven Kopplung des ersten und des zweiten Exzenterkoppelmechanismus mit der Werkzeugspindel ein erster Freilaufmechanismus und ein zweiter Freilaufmechanismus vorgesehen ist.

Die Aufgabe der Erfindung wird auf diese Weise gelöst.

Erfindungsgemäß ermöglicht nämlich der Oszillationsantrieb eine kombinierte Abtriebsbewegung, die sowohl eine oszillatorische Komponente als auch eine Drehkomponente aufweist. Mit anderen Worten kann bei zunehmendem Drehwinkel einer im Wesentlichen kontinuierlichen Antriebsbewegung eine globale Zunahme eines Drehwinkels der Abtriebsbewegung erfolgen, die jedoch periodisch mit der Oszillationsfrequenz auftretende rückwärts gerichtete Drehungen bzw. Schwenkungen aufweist.

Auf diese Weise kann mit einfachen Mitteln ein Oszillationsantrieb bereitgestellt werden, der vorteilhafte Eigenschaften von kontinuierlich angetriebenen Werkzeugen, beispielsweise Kreissägen oder Tellerschleifmaschinen, mit Vorteilen oszillatorisch angetriebener Werkzeuge verknüpfen kann.

Oszillationsantriebe sind üblicherweise dazu ausgebildet, ein Werkzeug bei einer hohen Oszillationsfrequenz, etwa im Bereich zwischen 5.000 min⁻¹ und 30.000 min⁻¹, bei geringen Verschwenkwinkeln, etwa im Bereich zwischen ungefähr 0,5° und 7°, anzutreiben. Dies kann hochpräzise Bearbeitungen von Werkstücken ermöglichen. Das oszillierende Werkzeug erzeugt bei der Bearbeitung der Werkstücke nur geringe Reaktionskräfte bzw. Gegenmomente, die ein den Oszillationsantrieb führender Bediener auffangen muss. Verglichen etwa mit kontinuierlich gleichgerichtet angetriebenen Sägewerkzeugen, etwa Kreissägen, weisen oszillatorisch angetriebene Sägeblätter eine signifikant geringere Gefahr von Verletzungen auf. Somit kann etwa beim Betrieb von Oszillationsantrieben bei bestimmten Anwendungen auf Schutzhauben oder sonstige Abdeckungen verzichtet werden, die etwa aus Gründen der Arbeitssicherheit bei Kreissägen unverzichtbar wären. Ebenso lassen sich regelmäßig Stützelemente einsparen, wie etwa gesonderte Handgriffe zum Halten und Führen des Antriebs. Somit können Oszillationsantriebe kompakt und relativ leicht gestaltet werden, was der Handhabbarkeit und Leistungsfähigkeit weiter zugute kommt.

Kontinuierlich gleichgerichtet (unidirektional) angetriebene Werkzeuge, wie etwa Kreissägen oder Tellerschleifer, können hohe Abtragsleistungen aufweisen, die etwa durch eine hohe Relativgeschwindigkeit zwischen Werkzeug und Werkstück ermöglicht sind. Darüber hinaus ergibt sich beim kontinuierlichen Umlauf des Werkzeugs regelmäßig ein gleichmäßiger Verschleiß von Wirkflächen bzw. Wirkgeometrien, wie etwa Verzahnungen, Schleifmittelbeschichtungen oder Ähnlichem. Somit können kontinuierlich gleichgerichtet angetriebene Werkzeuge grundsätzlich so lange genutzt werden, bis etwa eine Sägeverzahnung gleichmäßig über den gesamten Umfang eines Kreissägeblatts verschlissen ist.

Ein Oszillationsantrieb mit einer Werkzeugspindel, die periodisch hin und her schwenkend mit richtungsabhängiger Auslenkung antreibbar ist, kann von all den vorgenannten Vorteilen profitieren. Dies kann insbesondere bei einer Verwendung runder oder tellerförmiger Werkzeuge zum Tragen kommen. Dabei kann es sich etwa um Sägewerkzeuge oder Schleifwerkzeuge handeln. Sägewerkzeuge können etwa eine umfangseitig angeordnete Verzahnung aufweisen. Die Verzahnung kann radial ausgerichtet sein, etwa analog zu Kreissägeblättern. Eine umfangseitig angeordnete Verzahnung kann jedoch auch axial ausgerichtet sein, vergleichbar etwa sogenannten Lochkreissägeblättern. Das runde oder tellerförmige Werkzeug kann ebenso jedoch auch als Schleifwerkzeug ausgebildet sein und etwa bodenseitig und/oder umfangseitig mit Schleifmitteln beschichtet sein.

Der erste und der zweite Exzenterkoppelmechanismus können grundsätzlich voneinander unabhängig sein. Der erste und der zweite Exzenterkoppelmechanismus können in einer Weise zusammengeschaltet werden, die es ermöglicht, die Spindelachse beim Hin- und Herschwenken richtungsabhängig um unterschiedlich große Winkel zu verschwenken. Die sich ergebenden Schwenkwinkel können etwa durch die geometrische Auslegung des ersten Exzenterkoppelmechanismus bzw. des zweiten Exzenterkoppelmechanismus bedingt sein.

Der Freilaufmechanismus kann eine drehrichtungsabhängige Dreh- oder Schwenkmitnahme zwischen zwei zu koppelnden Elementen ermöglichen. Der Freilaufmechanismus kann etwa auch als sogenannte Überholkupplung bezeichnet werden. Der Freilaufmechanismus kann etwa dazu ausgebildet sein, in einem ersten Betriebszustand eine Drehmitnahme eines Abtriebs durch einen Antrieb kraftschlüssig und/oder formschlüssig zu ermöglichen. Hierzu können etwa Sperrklinken, Klemmrollen, Klemmkörper, Schlingfedern oder Ähnliches verbaut sein. In einer sogenannten Mitnahmerichtung ergibt sich regelmäßig eine im Wesentlichen drehfeste Verbindung zwischen dem Antrieb und dem Abtrieb. Hingegen kann diese Verbindung in einer sogenannten Freilaufrichtung nicht aufrechterhalten werden. In der Freilaufrichtung erfolgt keine Drehmitnahme des Abtriebs durch den Antrieb. Indem jeder der beiden Exzenterkoppelmechanismen mit einem Freilauf mechanismus versehen ist, kann etwa drehrichtungsabhängig beispielsweise der erste Exzenterkoppelmechanismus zur Drehmitnahme mit der Werkzeugspindel gekoppelt werden und der zweite Exzenterkoppelmechanismus von der Drehmitnahme ausgeschlossen werden. Umgekehrt kann bei einer entgegengesetzten Drehrichtung bzw. Schwenkrichtung der zweite Exzenterkoppelmechanismus zur Drehmitnahme mit der Werkzeugspindel gekoppelt werden und der erste Exzenterkoppelmechanismus von der Drehmitnahme ausgeschlossen sein.

Gemäß einer vorteilhaften Ausgestaltung sind der erste Exzenterkoppelmechanismus und der zweite Exzenterkoppelmechanismus dazu ausgebildet, beim Umlauf der Antriebswelle die Werkzeugspindel mit einer Pilgerschrittcharakteristik anzutreiben.

Grundsätzlich kann die Schwenkbewegung der Werkzeugspindel als gleichsinnige Bewegung mit periodisch wiederkehrenden Teilrückläufen bezeichnet werden. Derartige Gestaltungen werden allgemein als sogenannte Pilgerschrittmechanismen bezeichnet. Abhängig von der Auslegung und Gestaltung des ersten Exzenter koppelmechanismus und des zweiten Exzenterkoppelmechanismus können sich verschiedene Extrema ergeben. So kann sich etwa dann, wenn die Auslenkung der Werkzeugspindel in einer Richtung deutlich größer als die Auslenkung in der anderen Richtung ist, eine Nahezu-Schrittcharakteristik ergeben, also eine gleichsinnige Bewegung mit periodisch wiederkehrenden Pausen bzw. Unterbrechungen. In Anbetracht der üblichen hohen Oszillationsfrequenzen kann sich für einen Bediener ein Eindruck einer nahezu kontinuierlichen Bewegung ergeben.

Insbesondere dann, wenn der erste Exzenterkoppelmechanismus und der zweite Exzenterkoppelmechanismus derart ausgelegt sind oder betrieben werden, dass sich die Auslenkungen der Werkzeugspindel in der einen Richtung und in der anderen Richtung nahezu entsprechen, kann die Werkzeugspindel in einer nahezu ideal drehoszillatorischen Weise angetrieben werden.

Gemäß einer Weiterbildung ist zumindest einer der Freilaufmechanismen schaltbar.

Wenn zumindest einer der Freilaufmechanismen schaltbar ausgeführt ist, können in einfacher Weise weitere Betriebsmodi des Oszillationsantriebs verwirklicht werden. Sofern sogar beide Freilaufmechanismen schaltbar sind, ergibt sich eine noch höhere Zahl möglicher Betriebsmodi.

Gemäß einer weiteren Ausgestaltung sind die Freilaufmechanismen bezüglich der Spindelachse axial zueinander versetzt an der Werkzeugspindel aufgenommen.

Die Freilaufmechanismen können insbesondere zwischen vorhandenen Lagern der Werkzeugspindel angeordnet sein. Um seitliche Kräfte aufnehmen zu können, kann es sich grundsätzlich empfehlen, einen gewissen Lagerabstand vorzusehen. Dieser (axiale) Bauraum ist ohnehin vorhanden. Somit können beide Freilaufmechanismen angeordnet werden, ohne wesentlichen zusätzlichen Bauraum zu beanspruchen.

Gemäß einer weiteren Ausgestaltung ist der zumindest eine schaltbare Freilaufmechanismus selektiv aktivierbar oder deaktivierbar, wobei der erste oder der zweite Exzenterkoppelmechanismus vorzugsweise zur permanenten Drehmitnahme mit der Werkzeugspindel koppelbar sind.

Durch diese Maßnahme kann etwa dann, wenn einer der beiden Exzenterkoppelmechanismen keinerlei Drehmitnahme erlaubt und der andere der beiden Exzenterkoppelmechanismen zur permanenten Drehmitnahme mit der Werkzeugspindel gekoppelt ist, eine reine Oszillationsbewegung der Werkzeugspindel verwirklicht werden. Dies kann etwa bei einer Verwendung unrunder bzw. nichtrotationssymmetrischer Werkzeuge, deren Wirkflächen richtungsabhängig gestaltet bzw. angeordnet sind, von Vorteil sein. Auf diese Weise können etwa sogenannte Einstichschnitte mit Sägeblättern gemäß dem europäischen Patent EP 0 881 023 B1 durchgeführt werden. Es ist anzumerken, dass selbst dann, wenn der erste Exzenterkoppelmechanismus und der zweite Exzenterkoppelmechanismus geometrisch dazu ausgelegt sind, beim periodischen Verdrehen bzw. Verschwenken der Werkzeugspindel in beiden Richtungen gleiche Schwenkwinkel zu gewährleisten, etwa durch Fertigungstoleranzen oder Montagetoleranzen bedingte Abweichungen auftreten können. In Anbetracht der hochfrequenten Schwenkbewegung können selbst kleinste Abweichungen im Zeitablauf zu einem "wandernden" Werkzeug führen. Wenn jedoch einer der beiden Exzenterkoppelmechanismen vollständig von der Drehmitnahme ausgeschlossen wird und der andere Exzenterkoppelmechanismus die Drehmitnahme in beiden Richtungen vollziehen kann, sind die Schwenkwinkel in beiden Richtungen regelmäßig identisch.

Ein vollständiges Sperren des Exzenterkoppelmechanismus, also eine Mitnahme der Werkzeugspindel in beiden Richtungen, kann etwa dann erfolgen, wenn der zugehörige Freilaufmechanismus zwei Freiläufe aufweist, die entgegengerichtete Mitnahmerichtungen aufweisen.

Gemäß einer weiteren Ausgestaltung erlaubt der zumindest eine schaltbare Freilaufmechanismus einen Wechsel zwischen einer Mitnahmerichtung und einer Freilaufrichtung.

Auch dies kann etwa dann verwirklicht werden, wenn dem Freilaufmechanismus zwei Freiläufe zugeordnet sind, die entgegengerichtete Mitnahmerichtungen bzw. Freilaufrichtungen aufweisen. Nunmehr kann selektiv einer der beiden Freiläufe vom Zusammenwirken mit der Werkzeugspindel ausgenommen werden.

In vorteilhafter Weiterbildung weist die Antriebswelle an ihrem der Werkzeugspindel zugewandten Ende einen ersten und einen zweiten Exzenterabschnitt mit einem Kreisquerschnitt auf, die entlang der Längsachse axial voneinander versetzt sind und deren Exzenterachsen parallel von der Längsachse beabstandet und zueinander bezüglich der Längsachse winklig versetzt sind, vorzugsweise um ungefähr 180° versetzt, wobei der erste und der zweite Exzenterkoppelmechanismus vorzugsweise fliegend gelagert sind.

Somit kann jedem Exzenterkoppelmechanismus ein Exzenterabschnitt der Antriebswelle zugeordnet werden. Die Gestaltung des jeweiligen Exzenterabschnitts, insbesondere die Auslegung der jeweiligen Exzentrizität, kann die sich beim Hin- und Herschwenken der Spindelachse ergebenden richtungsabhängigen Auslenkungen geeignet beeinflussen.

Wenn der erste und der zweite Exzenterabschnitt zueinander um 180° bezüglich der Längsachse der Antriebswelle versetzt sind, kann sich beim Umlauf der Antriebswelle eine gegenläufige Hin- und Herbewegung ergeben.

Eine fliegende Anordnung, also eine Anordnung des ersten und des zweiten Exzenterabschnitts an einem Wellenende, das nur einseitig gelagert ist, begünstigt eine kompakte Bauform und einen einfachen Aufbau des Oszillationsantriebs.

Gemäß einer weiteren Ausgestaltung sind der erste und der zweite Exzenterkoppelmechanismus zueinander gegenläufig orientiert mit der Antriebswelle gekoppelt, wobei dem ersten Exzenterkoppelmechanismus eine erste Exzentergabel und dem zweiten Exzenterkoppelmechanismus eine zweite Exzentergabel zugeordnet ist, die beim Umlauf der Antriebswelle gegenläufig verschwenkbar sind.

Die erste und die zweite Exzentergabel können etwa zwischen dem ersten und zweiten Freilaufmechanismus und dem ersten und zweiten Exzenterabschnitt angeordnet sein, und mit diesen jeweils mittelbar oder unmittelbar zusammenwirken. Eine Exzentergabel erlaubt es, eine Antriebsbewegung, die etwa einen exzentrischen Umlauf eines Exzenterabschnitts aufweist, in eine oszillierende Abtriebsbewegung umzuwandeln, die etwa einem der Freilaufmechanismen zugeführt werden kann.

Dabei kann aus der Exzentrizität der Exzenterabschnitte und der Länge der Exzentergabeln auf sich ergebende Schwenkwinkel geschlossen werden.

In vorteilhafter Weiterbildung dieser Ausgestaltung ist die erste Exzentergabel in einer ersten Schwenkebene und die zweite Exzentergabel in einer zweiten Schwenkebene verschwenkbar, die zueinander parallel und voneinander beabstandet sind, wobei die erste Schwenkebene und die zweite Schwenkebene jeweils im Wesentlichen parallel zur Längsachse und im Wesentlichen senkrecht zur Spindelachse orientiert sind.

Die erste Schwenkebene und die zweite Schwenkebene können etwa den gleichen Abstand aufweisen wie die an der Werkzeugspindel aufgenommenen Freilaufmechanismen. Somit kann trotz der grundsätzlich gegenläufigen Bewegung der ersten und der zweiten Exzentergabel unter Vermeidung von Berührungen oder Kollisionen der Bauraumbedarf des ersten und zweiten Exzenterkoppelmechanismus klein gehalten werden.

Diese Maßnahme wird dadurch weitergebildet, dass die zweite Exzentergabel einen Ausleger aufweist, der einen parallel zur Spindelachse orientierten Versatz bewirkt und an dem eine Koppelfläche für den zweiten Exzenterabschnitt vorgesehen ist.

Auf diese Weise kann trotz voneinander beabstandeter Schwenkebenen eine Kopplung beider Exzentergabeln mit den an der Antriebswelle vorgesehenen ersten und zweiten Exzenterabschnitten realisiert werden. Dies kann etwa im Wesentlichen in einer Ebene erfolgen, die im Bereich der Längsachse der Antriebswelle angeordnet ist. Es versteht sich, dass beim Umlauf der Antriebswelle der erste und der zweite Exzenterabschnitt eine Kreisbahn durchlaufen, sich also nicht etwa nur in dieser Ebene bewegen. Gleichwohl können die erste und die zweite Exzentergabel etwa dazu ausgestaltet sein, eine Projektion dieser Kreisbewegung auf diese Ebene zu übertragen.

Gemäß einer weiteren Ausgestaltung ist am ersten und am zweiten Exzenterabschnitt jeweils ein balliges Lager aufgenommen, das mit korrespondierenden Koppelflächen der ersten oder der zweiten Exzentergabel zusammenwirkt.

Beim Umlauf des ersten und des zweiten Exzenterabschnitts und einer entsprechenden Mitnahme der ersten bzw. der zweiten Exzentergabel ergibt sich bei Betrachtung aller beteiligten Komponenten insgesamt eine räumliche Bewegung. Die balligen Lager, zum Beispiel Gleit- oder Wälzlager mit balligen Außenflächen, erlauben eine hinreichende Berührung zwischen beteiligten Komponenten, auch bei beträchtlichen Auslenkungen der ersten bzw. zweiten Exzentergabel. Somit kann etwa eine übermäßige Lagerbelastung oder sogar ein Klemmen vermieden werden.

Das Inkaufnehmen der räumlichen Bewegung, also des Zusammenspiels zwischen dem Umlauf des Exzenterabschnitts um die Längsachse und des Verschwenkens der zugehörigen Exzentergabel in der Schwenkebene, die etwa parallel zur Längsachse angeordnet ist, trägt in hohem Maße dazu bei, die kompakte Bauweise des Oszillationsantriebs realisieren zu können.

Gemäß einer weiteren Ausgestaltung sind die Spindelachse und die Längsachse im Wesentlichen senkrecht zueinander orientiert, wobei die Antriebswelle vorzugsweise als Motorwelle eines Antriebsmotors ausgeführt ist.

Auch durch diese Maßnahme kann eine bauraumoptimale Gestaltung des Oszillationsantriebs gefördert werden. Insbesondere kann die Anzahl erforderlicher Komponenten, wie etwa Lagerstellen, Zwischenwellen, Getriebekomponenten und dergleichen, reduziert werden. Der Oszillationsantrieb kann besonders leicht ausgeführt sein und eine hohe Ergonomie aufweisen.

In vorteilhafter Weiterbildung sind der erste und zweite Exzenterkoppelmechanismus zum Massenausgleich ausgebildet, wobei vorzugsweise die erste und zweite Exzentergabel ein aufeinander abgestimmtes Trägheitsmoment aufweisen.

Durch diese Maßnahme kann etwa der Umstand ausgenutzt werden, dass gemäß einer bevorzugten Ausgestaltung die Exzenterkoppelmechanismen, bzw. zumindest deren Exzentergabeln, gegenläufig hin und her schwenken. Insbesondere kann etwa ein jeweiliges Massenträgheitsmoment des ersten und zweiten Exzenterkoppelmechanismus durch gestalterische Maßnahmen und Variation der Massenverteilung beeinflusst werden. Somit können beim Betrieb des Oszillationsantriebs auftretende Vibrationsbelastungen deutlich reduziert werden.

In diesem Zusammenhang ist es bevorzugt, wenn die Schwenkebenen der ersten Exzentergabel und der zweiten Exzentergabel zueinander einen möglichst geringen Abstand aufweisen. Dies kann dazu beitragen, den Massenausgleich weiter zu optimieren.

Insbesondere ist es bevorzugt, wenn an der Werkzeugspindel ein Werkzeug mit im Wesentlichen runder oder tellerförmiger Grundfläche aufgenommen ist, insbesondere ein Sägewerkzeug oder ein Schleifwerkzeug.

Die Aufgabe der Erfindung wird ferner gelöst durch die Verwendung eines Oszillationsantriebs nach einem der vorgenannten Aspekte mit einem Sägewerkzeug oder Schleifwerkzeug mit im Wesentlichen runder oder tellerförmiger Grundfläche zur Bearbeitung eines Werkstücks.

Auch auf diese Weise wird die Aufgabe der Erfindung gelöst.

Erfindungsgemäß kann sich bei Verwendung des Oszillationsantriebs, etwa bei einem Handwerkzeug, ein gleichmäßiger und insgesamt reduzierter Verschleiß des Werkzeugs ergeben, da das Werkzeug insgesamt mit der Werkzeugspindel umlaufen kann. Gleichwohl eignet sich der Oszillationsantrieb für feine, präzise Arbeiten. Die Beibehaltung einer (Teil-) Oszillationscharakteristik kann ferner dazu führen, dass beim Angriff des Werkzeugs an das Werkstück nur geringe Gegenkräfte bzw. ein geringes Gegenmoment entstehen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, so wie in den beigefügten Ansprüchen definiert.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Ansicht eines Oszillationsantriebs mit einem Werkzeug;
- Fig. 2: einen seitlichen Schnitt durch einen Oszillationsantrieb im Bereich seines Getriebekopfes;
- Fig. 3: einen Schnitt durch den Oszillationsantrieb gemäß Fig. 2 entlang der Linie III-III;
- Fig. 4a, 4b: stark vereinfachte, schematische Veranschaulichungen geometrischer Zusammenhänge beim Oszillationsantrieb gemäß Fig. 3;
- Fig. 5: eine geschnittene, stark vereinfachte Draufsicht eines Freilaufmechanismus mit einem Freilauf;
- Fig. 6: eine gebrochene seitliche Ansicht des Freilaufmechanismus gemäß Fig. 5;
- Fig. 7: eine schematische, stark vereinfachte, gebrochene Draufsicht eines alternativen Freilaufs;
- Fig. 8: eine stark vereinfachte geschnittene Draufsicht eines weiteren Freilaufs;
- Fig. 9: eine stark vereinfachte Draufsicht eines noch weiteren Freilaufs; und
- Fig. 10a bis 10c: schematische Darstellungen von Übertragungsfunktionen, die mögliche Übertragungscharakteristika eines Oszillationsantriebs veranschaulichen.

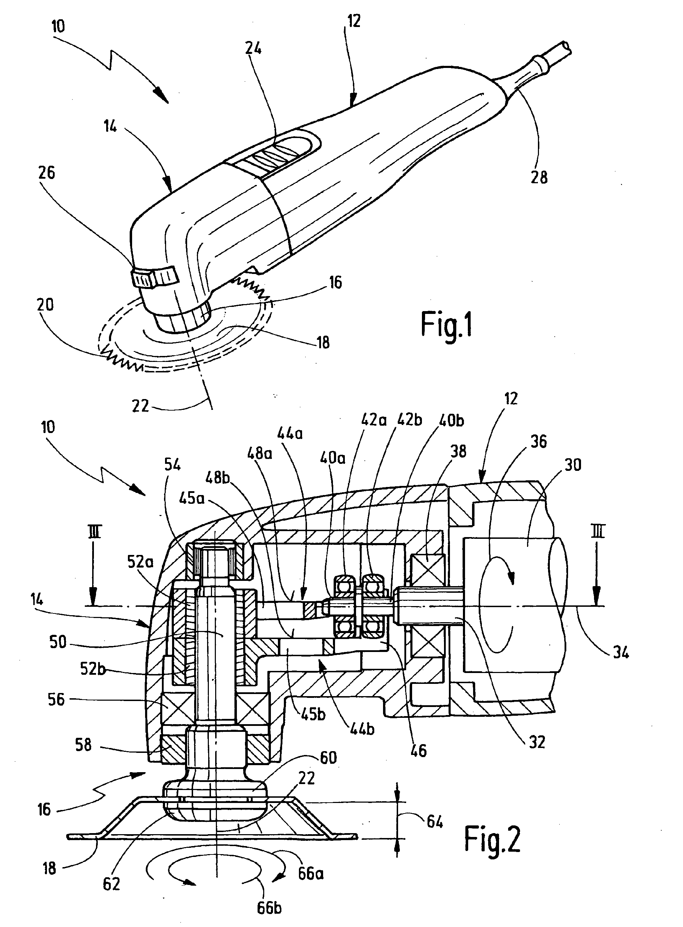

Fig. 1 zeigt eine perspektivische Ansicht eines Oszillationsantriebs, der insgesamt mit 10 bezeichnet ist. Der Oszillationsantrieb 10 kann etwa als kraftgetriebenes Werkzeug, insbesondere als Handwerkzeug, Verwendung finden.

Der Oszillationsantrieb 10 weist ein Gehäuse 12 auf, das im Wesentlichen etwa stabförmig ausgebildet ist und in seinem vorderen Endbereich mit einem Getriebekopf 14 versehen ist. Der Getriebekopf 14 kann gehäuseseitig als integraler Bestandteil des Gehäuses 12 ausgeführt sein oder ein separates (Teil-) Gehäuse aufweisen. Im Getriebekopf 14 ist eine Werkzeugspindel 16 aufgenommen, die im Wesentlichen etwa senkrecht zur stabförmigen Erstreckung des Gehäuses 12 orientiert ist. An der Werkzeugspindel 16 ist ein Werkzeug 18 aufgenommen.

Das Werkzeug 18 weist eine etwa runde oder kreisförmige Grundfläche auf, an deren Umfangsseite eine durchgehende Verzahnung 20 ausgebildet ist, in Fig. 1 zum Teil durch gestrichelte Linien dargestellt. Die Verzahnung 20 kann etwa als Sägeverzahnung ausgebildet sein. Andere Gestaltungen des Werkzeugs 18 sind denkbar. Das Werkzeug 18 kann etwa als Sägewerkzeug oder als Schleifwerkzeug ausgebildet sein. Ein Sägewerkzeug kann grundsätzlich etwa eine radial nach außen gerichtete Umfangsverzahnung aufweisen, ähnlich etwa einem Kreissägeblatt. Ferner ist eine topfförmige Gestaltung des Werkzeugs 18 denkbar, bei der die Verzahnung 20 an einer Stirnfläche des Werkzeugs 18 angeordnet ist, vergleichbar etwa einem Lochkreissägeblatt.

Das Werkzeug 18 kann im Bereich der Verzahnung 20 mit verschleißhemmenden und/oder festigkeitssteigernden Beschichtungen versehen sein.

Schließlich kann das Werkzeug 18 auch als Schleifwerkzeug, insbesondere als Schleifscheibe, ausgebildet sein. Eine Schleifscheibe kann etwa auch segmentiert sein. Die Schleifscheibe kann umfangsseitig und/oder bodenseitig, also etwa an einer vom Getriebekopf 14 abgewandten Fläche, mit Schleifmitteln versehen bzw. beschichtet sein. Abhängig von einem zu bearbeitenden Werkstoff können geeignete abrasive Mittel als Schleifmittel Verwendung finden.

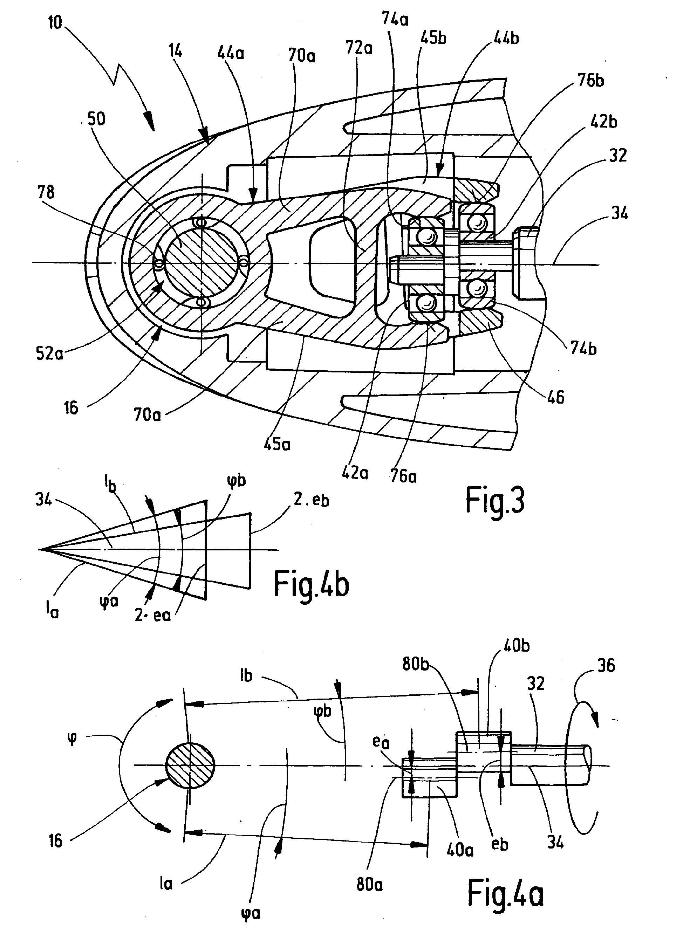

Der Oszillationsantrieb 10 ist in besonderer Weise dazu ausgestaltet, die Werkzeugspindel 16 mit dem daran aufgenommenen Werkzeug 18 um eine Spindelachse 22 zu verschwenken. Dies wird nachfolgend anhand der Fig. 2 und 3 erläutert.

Gemäß der Darstellung in Fig. 1 weist der Oszillationsantrieb 10 ferner einen Betätigungsschalter 24 auf, der am Gehäuse 12 aufgenommen ist. Mittels des Betätigungsschalters 24 kann ein Bediener den Oszillationsantrieb 10 aktivieren und deaktivieren. Ferner ist am Getriebekopf 14 ein Stellschalter 26 angedeutet, der etwa betätigt werden kann, um verschiedene Betriebsmodi, insbesondere verschiedene Übertragungskonfigurationen, des Oszillationsantriebs 10 zu aktivieren. An seinem dem Getriebekopf 14 abgewandten Ende ist das Gehäuse 12 ferner mit einem Netzanschluss 28 versehen, etwa einem kabelgebundenen Netzanschluss 28 zur netzgebundenen Spannungsversorgung. Es versteht sich, dass der Oszillationsantrieb 10 etwa auch eine netzunabhängige Spannungsversorgung aufweisen kann, insbesondere mit einem Akkumulator betrieben werden kann. Ebenso ist etwa auch eine fluidische Energieversorgung denkbar, beispielsweise mittels einer Druckluftleitung zur Versorgung eines Druckluftmotors.

In den Fig. 2 und 3 ist der Oszillationsantrieb 10 jeweils im Bereich des Getriebekopfes 14 geschnitten in einer Seitenansicht und einer damit korrespondierenden Draufsicht dargestellt.

Im Gehäuse 12 des Oszillationsantriebs 10 ist ein Antriebsmotor 30 aufgenommen, der dazu ausgebildet ist, eine Antriebswelle 32 rotatorisch um deren Längsachse 34 anzutreiben, vergleiche auch einen mit 36 bezeichneten Pfeil. Die Längsachse 34 und die Spindelachse 22 sind zueinander etwa rechtwinklig orientiert. Die Antriebswelle 32 ist an einem Motorlager 38 aufgenommen. Mit einem freien Ende durchragt die Antriebswelle 32 das Motorlager 38 in Richtung der Werkzeugspindel 16. In diesem überstehenden Bereich weist die Antriebswelle 32 einen ersten Exzenterabschnitt 40a und einen dazu entlang der Längsachse 34 versetzten zweiten Exzenterabschnitt 40b auf. Die Orientierung der Exzenterabschnitte 40a, 40b kann einer Zusammenschau der Fig. 2 und der Fig. 3 entnommen werden. Die Exzenterabschnitte 40a, 40b sind bezüglich der Längsachse 34 zueinander entgegengerichtet radial versetzt. Die Exzenterabschnitte 40a, 40b sind fliegend gelagert. Mit anderen Worten sind die Exzenterabschnitte 40a, 40b einseitig durch das Motorlager 38 abgestützt. In Richtung der Werkzeugspindel 16 erfolgt keine weitere Lagerung. Auf diese Weise kann eine komplexe, Bauraum beanspruchende Gestaltung vermieden werden.

Am ersten Exzenterabschnitt 40a ist ein erstes balliges Lager 42a angeordnet. Am zweiten Exzenterabschnitt 40b ist ein zweites balliges Lager 42b angeordnet. Die balligen Lager 42a, 42b sind dazu ausgebildet, die Antriebswelle 32 mit einem ersten Exzenterkoppelmechanismus 44a und einem zweiten Exzenterkoppelmechanismus 44b zu koppeln. Der erste Exzenterkoppelmechanismus 44a weist eine erste Exzentergabel 45a auf. Der zweite Exzenterkoppelmechanismus 44b weist eine zweite Exzentergabel 45b auf. Aufgrund des Zusammenwirkens mit den Exzenterabschnitten 40a, 40b beim Umlauf der Antriebswelle 32 erfahren die Exzentergabeln 45a, 45b jeweils eine Schwenkbewegung. Diese erfolgt grundsätzlich in einer Ebene, die etwa senkrecht zur Ansichtsebene in Fig. 2 ist.

In Fig. 2 ist mit 48a eine Fläche der ersten Exzentergabel 45a angedeutet, die beim Verschwenken etwa deren Schwenkebene beschreiben kann. Ferner ist mit 48b eine Fläche der zweiten Exzentergabel 45b angedeutet, die beim Verschwenken deren Schwenkebene beschreiben kann. Die Flächen bzw. Schwenkebenen 48a, 48b sind voneinander in einer Längsrichtung der Spindelachse 22 beabstandet. Der Umlauf des ersten und zweiten Exzenterabschnitts 40a, 40b bzw. der daran aufgenommenen balligen Lager 42a, 42b erfolgt jedoch im Wesentlichen im Bereich der Längsachse 34 der Antriebswelle 32 sowie eines sich durch den jeweiligen exzentrischen Versatz des ersten und zweiten Exzenterabschnitts 40a, 40b ergebenden Versatzraumes. Da die erste und die zweite Exzentergabel 45a, 45b nicht in der gleichen Ebene (auf gleicher Höhe) verschwenkbar sind, ist an der zweiten Exzentergabel 45b ein Ausleger 46 vorgesehen, der den Abstand der Fläche oder Schwenkebene 48b zum Bereich der Längsachse 34 kompensiert. Somit können der erste und zweite Exzenterkoppelmechanismus 44a, 44b im Wesentlichen auf gleicher Höhe mit der Antriebswelle 32 zusammenwirken, auch wenn deren Exzentergabeln 45a, 46b beabstandet angeordnet sind.

Es ist grundsätzlich vorstellbar, auch an der ersten Exzentergabel 44a einen Versatz vorzusehen. Beispielsweise können etwa der erste Exzenterkoppelmechanismus 44a und der zweite Exzenterkoppelmechanismus 44b auf gegenüberliegenden Seiten der Längsachse 34 mit im Wesentlichen gleichen Abständen dazu angeordnet werden.

Der erste und der zweite Exzenterkoppelmechanismus 44a, 44b sind an einem Spindelschaft 50 der Werkzeugspindel 16 aufgenommen. Die Kopplung des ersten Exzenterkoppelmechanismus 44a mit dem Spindelschaft 50 erfolgt über einen ersten Freilaufmechanismus 52a. Die Kopplung des zweiten Exzenterkoppelmechanismus 44b mit dem Spindelschaft 50 erfolgt über einen zweiten Freilaufmechanismus 52b. Die Freilaufmechanismen 52a, 52b sind zueinander axial versetzt am Spindelschaft 50 der Werkzeugspindel 16 angeordnet.

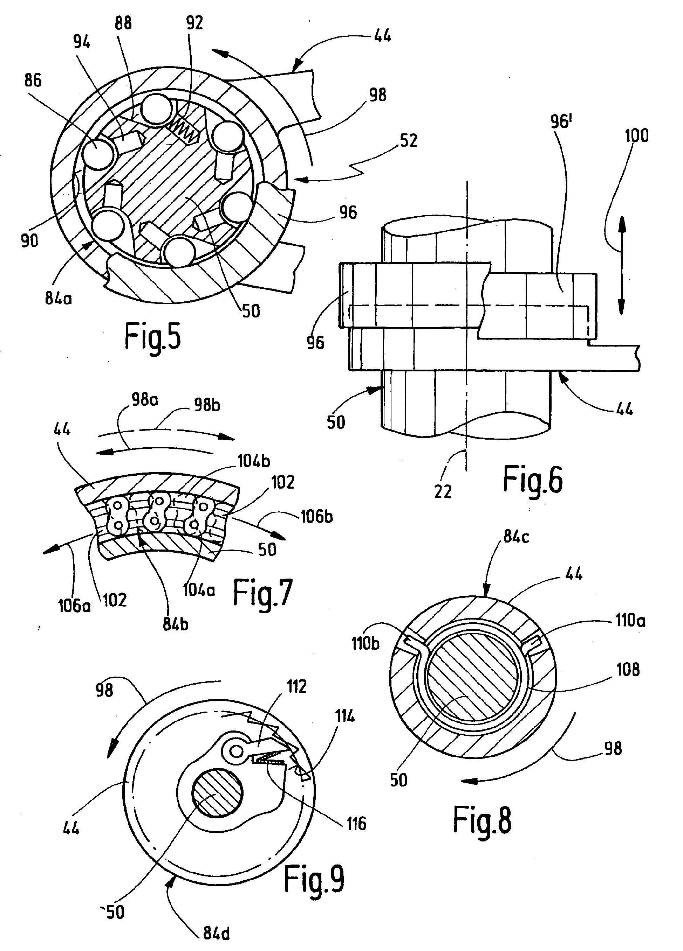

Die Freilaufmechanismen 52a, 52b erlauben abhängig von ihrer jeweiligen Konfiguration eine selektive Drehmitnahme oder Schwenkmitnahme der Werkzeugspindel 16 durch die Exzentergabeln 45a, 46b der Exzenterkoppelmechanismen 44a, 44b. Verschiedene Konfigurationen bzw. Betriebsmodi der Freilaufmechanismen 52a, 52b können etwa über den Stellschalter 26 gemäß Fig. 1 aktiviert werden. Zu möglichen näheren Ausgestaltungen der Freilaufmechanismen 52a, 52b wird auf die Fig. 5 bis 9 und die zugehörige Beschreibung verwiesen.

Der Spindelschaft 50 der Werkzeugspindel 16 ist an einem oberen, gehäuseseitigen Lager 54 und einem werkzeugseitigen Lager 56 im Getriebekopf 14 aufgenommen. Beispielsweise kann das Lager 56 als Festlager und das Lager 54 als Loslager ausgebildet sein. Ferner ist in Fig. 2 mit 58 ein Dichtring, insbesondere etwa ein Wellendichtring, angedeutet. Zur Aufnahme der beim Betrieb des Oszillationsantriebs 10 auftretenden Querkräfte, die etwa als Biegelasten auf den Spindelschaft 50 einwirken können, empfiehlt sich grundsätzlich ein gewisser Lagerabstand zwischen den Lagern 54 und 56. Dieser ohnehin vorhandene Bauraum wird durch den ersten und zweiten Exzenterkoppelmechanismus 44a, 44b in optimaler Weise genutzt, so dass auch bei erweiterter Funktionalität des Oszillationsantriebs 10 eine kompakte Bauform gewahrt ist.

An ihrem werkzeugseitigen Ende weist die Werkzeugspindel 16 eine Werkzeugaufnahme 60 auf. An der Werkzeugaufnahme 60 ist das Werkzeug 18 aufgenommen und mittels einer Werkzeugbefestigung 62 gesichert. Beispielsweise kann das Werkzeug 18 an der Werkzeugspindel 16 formschlüssig aufgenommen und kraftschlüssig gesichert sein. Die Aufnahme kann etwa derart erfolgen, dass an der Werkzeugaufnahme 60 ein Außenprofil vorgesehen ist, das mit einem Innenprofil einer Aufnahmeöffnung des Werkzeugs 18 korrespondiert. Dabei kann es sich etwa um einen Sechskant, ein Zahnprofil oder Ähnliches handeln.

Beim Werkzeug 18 kann es sich empfehlen, eine Kröpfung bzw. einen Versatz 64 vorzusehen, um zu verhindern, dass die Werkzeugbefestigung 62 an der dem Getriebekopf 14 abgewandten Seite des Werkzeugs 18 über dieses hinausragt. Somit kann etwa dann, wenn das Werkzeug 18 als Schleifwerkzeug ausgebildet ist, eine vollflächige Bearbeitung eines Werkstücks ermöglicht werden. Auch bei Sägeanwendungen kann ein gekröpftes Werkzeug 18 von Vorteil sein. Der Oszillationsantrieb 10 ist dazu ausgebildet, die Werkzeugspindel 16 periodisch hin und her zu verschwenken, wobei sich richtungsabhängige Schwenkwinkel ergeben können. Diese charakteristische Bewegung der Werkzeugspindel 16 ist durch zwei entgegengerichtete Pfeile angedeutet, die mit 66a und 66b bezeichnet sind. Mit anderen Worten kann sich beim Werkzeug 18 im Betrieb etwa eine Bewegung mit einer Pilgerschrittcharakteristik ergeben.

In Fig. 3 ist ferner angedeutet, dass der Freilaufmechanismus 52a beispielsweise Mitnahmekörper 78 zur richtungsabhängigen Mitnahme des Spindelschafts 50 der Werkzeugspindel 16 durch den ersten Exzenterkoppelmechanismus 44a aufweisen kann.

Nähere Gestaltungen möglicher Freiläufe, die bei den Freilaufmechanismen 52a, 52b genutzt werden können, werden nachfolgend anhand der Fig. 5 bis 9 beschrieben.

Die geschnittene Draufsicht des Oszillationsantriebs 10 im Bereich des Getriebekopfs 14 in Fig. 3 wird zur Veranschaulichung durch schematisch stark vereinfachte Darstellungen der Fig. 4a und 4b ergänzt.

Der erste Exzenterabschnitt 40a und der zweite Exzenterabschnitt 40b sind bezüglich der Längsachse 34 etwa um 180° versetzt. Das heißt, gemäß der Darstellungen in Fig. 3 und Fig. 4a liegen sich der erste Exzenterabschnitt 40a und der zweite Exzenterabschnitt 40b bezüglich der Längsachse 34 gegenüber. Bei dieser Gestaltung kann sich beim Umlauf der Antriebswelle 32 eine gegenläufige bzw. gegengerichtete Schwenkbewegung der ersten und zweiten Exzentergabel 45a, 45b des ersten und zweiten Exzenterkoppelmechanismus 44a, 44b ergeben.

Für jede der Exzentergabeln 45a, 45b können sich bestimmte Auslenkungen ergeben. Dies kann grundsätzlich durch die jeweilige Exzentrizität des zugehörigen Exzenterabschnitts 40a, 40b und eine wirksame Länge der jeweiligen Exzentergabel 45a, 45b beeinflusst werden. In Fig. 4a ist mit 80a eine erste Exzenterachse 40a und mit 80b eine zweite Exzenterachse des zweiten Exzenterabschnitts 40b angedeutet. Die erste Exzenterachse 80a ist um ein Maß eₐ von der Längsachse 34 beabstandet. Die zweite Exzenterachse 80b ist um ein Maß e_{b} von der Längsachse 34 versetzt. Die erste Exzentergabel 45a weist eine wirksame Länge 1ₐ auf, die sich etwa zwischen der Spindelachse 22 der Werkzeugspindel 16 und einem Koppelpunkt mit dem ersten exzentrischen Abschnitt 40a ergeben kann. In gleicher Weise kann die zweite Exzentergabel 45b eine wirksame Länge 1_{b} aufweisen.

Wenn die Antriebswelle 32 ausgehend von der in Fig. 4a gezeigten Stellung um etwa 180° verdreht wird, vollzieht etwa die erste Exzentergabel 45a eine Verschwenkung um einen Winkel φₐ, der sich im Wesentlichen durch die wirksame Länge 1ₐ und die zweifache Exzentrizität eₐ ergibt. In analoger Weise kann ein sich bei der zweiten Exzentergabel 45b ergebender Schwenkwinkel φ_{b} auf deren wirksame Länge 1_{b} und die zweifache Exzentrizität e_{b} zurückgeführt werden, vergleiche auch Fig. 4b.

Der erste Exzenterkoppelmechanismus 44a und der zweite Exzenterkoppelmechanismus 44b können drehrichtungsabhängig selektiv mit der Werkzeugspindel 16 zu deren Mitnahme gekoppelt werden. Somit kann etwa bei einem vollständigen Umlauf der Antriebswelle 32 die Werkzeugspindel 16 zunächst etwa im Uhrzeigersinn um den Winkel φₐ verschwenkt werden und danach im Gegenuhrzeigersinn um den Winkel φ_{b}. Das Verhältnis der Winkel φₐ und φ_{b} zueinander kann etwa durch Variation des Verhältnisses zwischen den Quotienten eₐ/lₐ und e_{b}/l_{b} in gewünschter Weise beeinflusst werden. Mit anderen Worten kann etwa bei einer möglichen Pilgerschrittbewegung der Werkzeugspindel 16 das Verhältnis zwischen einem vorwärts gerichteten Schritt und einem rückwärts gerichteten Schritt angepasst werden.

Gemäß Fig. 3 kann die Exzentergabel 45a des ersten Exzenterkoppelmechanismus 44a zwei Gabelarme 70a aufweisen, die zu Versteifungszwecken durch einen Steg 72a verbunden sind. Die zweite Exzentergabel 45b kann in gleicher Weise gestaltet sein. An den Exzentergabeln 45a, 45b sind Koppelflächen 74a, 74b vorgesehen, die dazu ausgebildet sind, mit balligen Flächen 76a, 76b der balligen Lager 42a, 42b zusammenzuwirken. Beim Umlauf der Antriebswelle 32 und der daraus resultierenden Schwenkbewegung der ersten und zweiten Exzentergabel 45a, 45b würden sich etwa dann, wenn rein zylindrische Lager mit ebenen Koppelflächen gekoppelt wären, hohe Lagerbelastungen bzw. Klemmkräfte ergeben. Derlei nachteilige Effekte können durch die besondere Paarung zwischen den balligen Lagern 42a, 42b und den damit korrespondierenden Koppelflächen 74a, 74b vermieden werden.

Die Exzenterkoppelmechanismen 44a, 44b können auch zum Massenausgleich herangezogen werden. So kann etwa angestrebt werden, die beiden Exzentergabeln 45a, 45b derart auszulegen und zu gestalten, dass sich im Betrieb ein annähernd gleiches Massenträgheitsmoment ergeben kann. Da sich insbesondere die beiden Exzentergabeln 45a, 45b gegenläufig verschwenken, kann eine Kompensation von Massenkräften erfolgen. Vibrationsbelastungen können reduziert werden.

In den Fig. 5 und 6 ist ein Exzenterkoppelmechanismus 44, der über einen Freilaufmechanismus 52 mit einem Spindelschaft 50 zusammenwirkt, vereinfacht gebrochen dargestellt. Es kann sich dabei um den Exzenterkoppelmechanismus 44a oder den Exzenterkoppelmechanismus 44b handeln.

Fig. 5 zeigt einen Schnitt durch den Spindelschaft 50. Der Freilaufmechanismus 52 weist einen Freilauf 84a auf, der eine Mehrzahl von Mitnahmekörpern oder Klemmkörpern 86 aufweist. Es kann sich dabei etwa um Klemmrollen handeln. Die Mitnahmekörper 86 sind in Ausnehmungen mit Aufnahmeflächen 88 des Spindelschafts 50 aufgenommen. Die Aufnahmeflächen 88 können etwa derart mit Innenflächen 90, die dem Exzenterkoppelmechanismus 44 zugeordnet sind, zusammenwirken, dass sich in einer Mitnahmerichtung 98 eine Mitnahme des Spindelschafts 50 durch den Exzenterkoppelmechanismus 44 ergibt. Hierzu kann etwa die Aufnahmefläche 88 in der Mitnahmerichtung 98 in Richtung auf die Innenfläche 90 spitzwinklig auslaufen. Entgegen der Mitnahmerichtung 98 kann hingegen ein stumpfer Auslauf erfolgen. Beim Verschwenken des Exzenterkoppelmechanismus 44 in der Mitnahmerichtung 98 werden die Mitnahmekörper 86 in Richtung des spitzen Winkels zwischen der Aufnahmefläche 88 und der Innenfläche 90 verlagert. Dabei kann sich aufgrund sich ergebender Reibverhältnisse eine Sperr- bzw. Klemmwirkung ergeben, aufgrund derer eine Mitnahme des Spindelschafts 50 erfolgen kann. Zur Optimierung der Mitnahmefunktion kann etwa jedem der Mitnahmekörper 86 eine Feder 92 zugeordnet sein, die in einer Tasche 94 im Spindelschaft 50 aufgenommen ist. In Fig. 5 ist lediglich eine der Federn 92 dargestellt. Durch die Feder 92 kann der Mitnahmekörper 86 in Richtung einer Mitnahmekonfiguration gedrängt werden.

Wenn der Exzenterkoppelmechanismus 44 entgegen der Mitnahmerichtung 98 verschwenkt wird, kann der Mitnahmekörper 86 aus der Mitnahmekonfiguration herausgedrängt werden und in Richtung des stumpfen Auslaufs der Aufnahmefläche 88 verlagert werden. In dieser Stellung kann sich keine reibungsbedingte Klemmwirkung, folglich keine Drehmitnahme ergeben.

In Fig. 5 ist ferner ein Stellelement 96 angedeutet, das etwa mit dem Stellschalter 26 gemäß Fig. 1 gekoppelt sein kann. Das Stellelement 96 kann dazu ausgestaltet sein, die Mitnahmekörper 86 zwangsweise in einer Freilaufkonfiguration zu halten, so dass sich unabhängig von der Schwenkrichtung des Exzenterkoppelmechanismus 44 keine Mitnahme des Spindelschafts 50 ergibt. Hierzu kann das Stellelement 86 etwa geeignete Schrägflächen (in Fig. 5 nicht dargestellt) aufweisen, die ein radiales Auslenken der Mitnahmekörper 86 verhindern. Zur Betätigung des Stellelements 96 kann dieses etwa relativ zum Freilauf 84a entlang des Spindelschafts 50 verlagert werden, vergleiche auch Fig. 6. Beispielsweise kann das Stellelement 96 in einer Stellrichtung 100 verlagert werden, um den Freilauf 84a selektiv zu aktivieren oder zu deaktivieren. In Fig. 6 deutet 96' eine Stellung des Stellelements 96 an, in der der Freilauf 84a derart deaktiviert ist, dass keine Mitnahme des Spindelschafts 50 durch den Exzenterkoppelmechanismus 44 erfolgen kann.

Fig. 7 veranschaulicht schematisch eine weitere mögliche Gestaltung eines Freilaufs 84b. Beispielhaft weist der Freilauf 84b gegensinnig orientierte erste Klemmkörper 104a und zweite Klemmkörper 104b auf, die grundsätzlich unabhängig voneinander sind. Mittels einer selektiven Aktivierung oder Deaktivierung der ersten Klemmkörper 104a oder der zweiten Klemmkörper 104b kann beim Freilauf 84b ein Wechsel zwischen einer Freilaufrichtung und einer Mitnahmerichtung erfolgen. Die Klemmkörper 104a sind derart orientiert, dass bei einer Verdrehung oder Verschwenkung des Exzenterkoppelmechanismus 44 in einer ersten Mitnahmerichtung 98a eine Mitnahme des Spindelschafts 50 erfolgen kann. Die zweiten Klemmkörper 104b sind zu den ersten Klemmkörpern 104a gegensinnig orientiert, so dass eine zugehörige zweite Mitnahmerichtung 98b ebenso gegensinnig zur ersten Mitnahmerichtung 98a orientiert ist. Die ersten Klemmkörper 104a können etwa mit Stellringen 102 gekoppelt sein, um eine richtungsabhängige Drehmitnahme des Spindelschafts 50 zu erlauben oder zu unterbinden. So können die ersten Klemmkörper 104a durch eine gegengerichtete Verlagerung der Stellringe 102, vergleiche etwa mit 106a, 106b bezeichnete Pfeile, in eine inaktive Konfiguration überführt werden. In ähnlicher Weise können die zweiten Klemmkörper 104 selektiv aktivierbar oder deaktivierbar gestaltet sein.

Insbesondere dann, wenn sowohl die ersten Klemmkörper 104a als auch die zweiten Klemmkörper 104b aktiviert sind, kann der Freilauf 84b vollständig gesperrt werden und eine richtungsunabhängige Drehmitnahme des Spindelschafts 50 ermöglichen. Die Drehmitnahme kann etwa abhängig von der Gestaltung der Klemmkörper 104a, 104b schlupfbehaftet sein oder ohne Schlupf erfolgen.

Fig. 8 zeigt eine weitere alternative Gestaltung eines Freilaufs 84c. Zur Bewegungsmitnahme des Spindelschafts 50 durch den Exzenterkoppelmechanismus 44 ist eine Schlingfeder 108 vorgesehen, die sich etwa dann, wenn der Exzenterkoppelmechanismus 44 in der Mitnahmerichtung 98 verschwenkt wird, am Spindelschaft 50 festziehen kann. Eine gegengerichtete Bewegung kann ein Lösen der Schlingfeder 108 bewirken. Die Schlingfeder 108 weist abgewinkelte Federenden 110a, 110b auf, die etwa in Aufnahmeöffnungen des Exzenterkoppelmechanismus 44 oder der Spindelachse 50 aufgenommen sein können. Die Federn 110a, 110b tragen zur Bewegungsmitnahme bei.

Fig. 9 zeigt eine schematische Prinzipdarstellung eines weiteren Freilaufmechanismus 84d, bei dem eine formgebundene richtungsabhängige Bewegungsmitnahme des Spindelschafts 50 durch den Exzenterkoppelmechanismus 44 realisiert ist. Ein solcher Freilauf 84d kann etwa als Klinkenmechanismus oder als Ratschenmechanismus bezeichnet werden. Der Freilauf 84d weist eine Klinke 112 auf, die etwa schwenkbar am Spindelschaft 50 aufgenommen sein kann. Die Klinke 112 ist dazu ausgebildet, mit einer Gegenkontur 114 zusammenzuwirken, die etwa am Exzenterkoppelmechanismus 44 vorgesehen sein kann. Die Klinke 112 und die Gegenkontur 114 sind derart aufeinander abgestimmt, dass bei einer Drehung bzw. Verschwenkung des Exzenterkoppelmechanismus 44 in der Mitnahmerichtung 98 eine Bewegungsmitnahme des Spindelschafts 50 erfolgt. Diese Bewegungsmitnahme erfolgt schlupffrei, wenn die Klinke 112 in die Gegenkontur 114 eingerastet ist. In der Gegenrichtung rutscht die Klinke 112 durch, es kann keine Bewegungsmitnahme erfolgen. Der Klinke 112 kann ein Vorspannelement, etwa eine Feder 116, zugeordnet sein, das die Klinke 112 in Richtung der Gegenkontur 114 mit einer Vorspannkraft beaufschlägt.

Es versteht sich, dass die anhand der Fig. 5 bis 9 exemplarisch gezeigten Freiläufe 84a bis 84d auch in anderer oder abgewandelter Weise gestaltet sein können. Dies betrifft insbesondere die Anordnung oder Zuordnung der Wirkelemente, die etwa auch vertauschbar sein kann. So können etwa die Freiläufe 84a bis 84d unmittelbar oder mittelbar über weitere Zwischenelemente an der Werkzeugspindel 16 oder den Exzenterkoppelmechanismen 44a, 44b aufgenommen sein. Basierend auf den dargelegten Wirkprinzipien ergibt sich eine Vielzahl weiterer Gestaltungsmöglichkeiten.

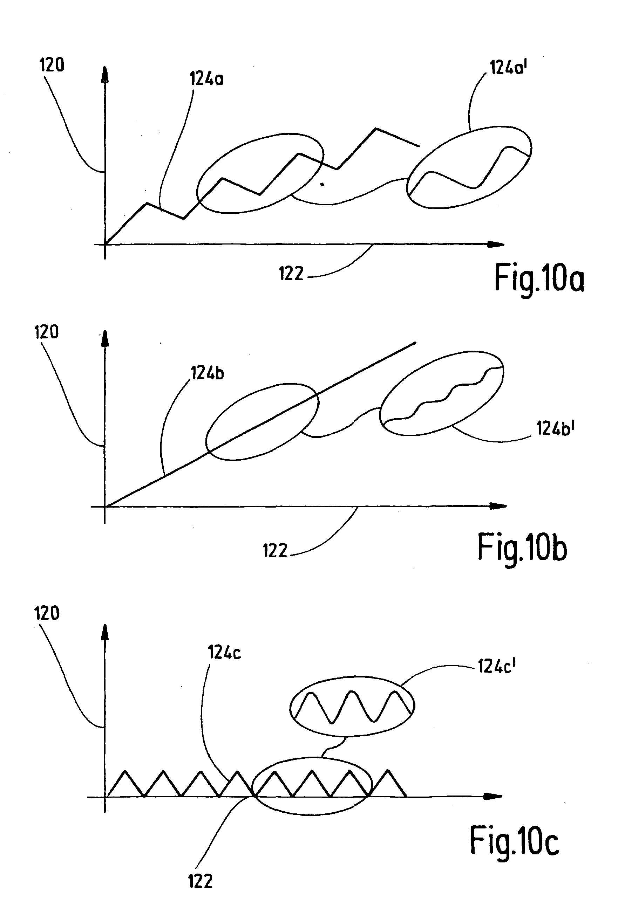

In den Fig. 10a bis 10c sind anhand von Diagrammen verschiedene Übertragungscharakteristika dargestellt, die sich beim Oszillationsantrieb 10 ergeben können. Mit 120 ist jeweils eine Achse bezeichnet, die eine resultierende Bewegung, insbesondere eine resultierende Verdrehung, mit einem Verdrehwinkel φ_{Abtrieb} der Werkzeugspindel 16 beschreibt. Mit 122 ist jeweils eine Achse bezeichnet, die einerseits einen Zeitablauf t verkörpern kann. Andererseits kann die Achse 122 etwa eine fortlaufende Antriebsbewegung beschreiben, insbesondere einen Verdrehwinkel φ_{Antrieb} der Antriebswelle 32.

In Fig. 10a veranschaulicht ein Graph 124a eine Übertragungscharakteristik, die etwa als Pilgerschrittcharakteristik bezeichnet werden kann. Global gesehen nimmt etwa der Winkel φ_{Antrieb} "stetig" zu, ist jedoch von partiellen Teilrückgängen gekennzeichnet. Es versteht sich, dass die konkrete Darstellung des Graphen 124a vereinfacht ist, insbesondere erfolgt ein Wechsel zwischen einer Vorwärtsbewegung und einer Rückwärtsbewegung regelmäßig nicht derart abrupt, dass sich eckige bzw. kantige Übergänge ergeben können. Ein Ausschnitt 124' beschreibt eine mögliche geglättete Übertragungscharakteristik. Das Verhältnis der Winkel eines vorwärts gerichteten Schritts und eines Rückschritts kann etwa 1:0.95, 1:0.85, 1:0.75 oder 1:0.65 betragen.

In Fig. 10b ist mit 124b ein Graph dargestellt, der etwa eine Schrittcharakteristik veranschaulicht. Wie eingangs bereits erwähnt, kann eine Antriebsoszillation sehr hochfrequent erfolgen. Demzufolge kann etwa der Detailverlauf des Graphen 124b im Zeitablauf nicht ohne Weiteres aufgelöst werden. Für einen Bediener kann sich ein Eindruck eines kontinuierlich konstant fortlaufenden Werkzeugs 18 an der Werkzeugspindel 16 ergeben. Wird jedoch die resultierende Bewegung mit einem anderen Zeitmaßstab betrachtet, etwa in Zeitlupe, kann sich eine Übertragungscharakteristik analog eines Ausschnitts 124b' ergeben.

Fig. 10c veranschaulicht mit 124c eine ideale Oszillationsbewegung, bei der sich etwa eine Hinbewegung und eine Herbewegung aufheben, so dass absolut betrachtet ein sich ergebender Abtriebswinkel φ_{Abtrieb} gleich oder nahe null ist. Mit 124c' ist eine geglättete Bewegungscharakteristik angedeutet, die sich etwa aufgrund trigonometrischer Zusammenhänge bei den Exzenterkoppelmechanismen 44a, 44b bei einem konstanten Umlauf der Antriebswelle 32 ergeben kann.

Je nach Auslegung der Exzenterabschnitte 40a, 40b und der Exzentergabeln 45a, 45b kann beim Oszillationsantrieb 10 gezielt eine der in den Fig. 10a bis 10c gezeigten Übertragungscharakteristika verwirklicht werden. Die in Fig. 10a gezeigte Charakteristik kann etwa durch eine Gestaltung bewirkt werden, bei der gilt: eₐ/lₐ > e_{b}/l_{b}, oder umgekehrt. Die in Fig. 10b gezeigte Charakteristik kann auf einer Auslegung beruhen, der zugrunde liegt: eₐ/lₐ » e_{b/}l_{b}, oder umgekehrt. Die in Fig. 10c gezeigte Charakteristik stellt sich insbesondere dann ein, wenn gilt: eₐ/lₐ ≈ e_{b}/l_{b},

Eine Abtriebsbewegung der Werkzeugspindel 16, die eine Pilgerschrittcharakteristik aufweist, erlaubt bei Verwendung eines im Wesentlichen runden oder tellerförmigen Werkzeugs 18 einen verzögerten kontinuierlichen Umlauf, der von hochfrequenten Oszillationen überlagert ist. Es kann sich unter Beibehaltung vorteilhafter Eigenschaften drehoszillatorischer Handwerkzeuge beim Werkzeug 18 ein optimales Verschleißverhalten ergeben.

## Patentansprüche

1. Oszillationsantrieb, mit einem Gehäuse (12) mit einem Getriebekopf (14), mit einer um ihre Längsachse (34) rotatorisch antreibbaren Antriebswelle (32), die mit einer Werkzeugspindel (16) zu deren Antrieb koppelbar ist, **dadurch gekennzeichnet, dass** der Antriebswelle (32) und der Werkzeugspindel (16) ein erster Exzenterkoppelmechanismus (44a) und ein zweiter Exzenterkoppelmechanismus (44b) zwischengeschaltet sind, die mit voneinander versetzten Exzenterabschnitten (40a, 40b) der Antriebswelle (32) zusammenwirken, dass der erste und der zweite Exzenterkoppelmechanismus (44a; 44b) dazu ausgebildet sind, die Werkzeugspindel (16) zum Antrieb eines Werkzeugs (18) um ihre Spindelachse (22) periodisch hin und her schwenkend mit richtungsabhängiger Auslenkung anzutreiben, dass der erste und der zweite Exzenterkoppelmechanismus (44a; 44b), dazu ausgebildet sind, beim Umlauf der Antriebswelle (32) die Werkzeugspindel (16) mit einer Schrittcharakteristik anzutreiben, und dass zur selektiven Kopplung des ersten und des zweiten Exzenterkoppelmechanismus (44a, 44b) mit der Werkzeugspindel (16) ein erster Freilaufmechanismus (52a) und ein zweiter Freilaufmechanismus (52b) vorgesehen ist.

2. Oszillationsantrieb (10) nach Anspruch 1, **dadurch gekennzeichnet, dass** der erste Exzenterkoppelmechanismus (44a) und der zweite Exzenterkoppelmechanismus (44b) dazu ausgebildet sind, beim Umlauf der Antriebswelle (32) die Werkzeugspindel (16) mit einer Pilgerschrittcharakteristik anzutreiben

3. Oszillationsantrieb (10) nach Anspruch 1 oder 2, **dadurch gekennzeichnet, dass** zumindest einer der Freilaufmechanismen (52a, 52b) schaltbar ist.

4. Oszillationsantrieb (10) nach einem der vorhergehenden Ansprüche, **dadurch gekennzeichnet, dass** die Freilaufmechanismen (52a, 52b) bezüglich der Spindelachse (22) axial zueinander versetzt an der Werkzeugspindel (16) aufgenommen sind.

5. Oszillationsantrieb (10) nach einem der vorhergehenden Ansprüche, **dadurch gekennzeichnet, dass** der zumindest eine schaltbare Freilaufmechanismus (52a, 52b) selektiv aktivierbar oder deaktivierbar ist, und dass der erste oder der zweite Exzenterkoppelmechanismus (44a, 44b) vorzugsweise zur permanenten Drehmitnahme mit der Werkzeugspindel (16) koppelbar ist.

6. Oszillationsantrieb (10) nach einem der vorhergehenden Ansprüche, **dadurch gekennzeichnet, dass** der zumindest eine schaltbare Freilaufmechanismus (52a, 52b) einen Wechsel zwischen einer Mitnahmerichtung und einer Freilaufrichtung erlaubt.

7. Oszillationsantrieb (10) nach einem der vorhergehenden Ansprüche, **dadurch gekennzeichnet, dass** die Antriebswelle (32) an ihrem der Werkzeugspindel (16) zugewandten Ende einen ersten und einen zweiten Exzenterabschnitt (40a, 40b) mit einem Kreisquerschnitt aufweist, die entlang der Längsachse (34) axial voneinander versetzt sind und deren Exzenterachsen (80a, 80b) parallel von der Längsachse (34) beabstandet und zueinander bezüglich der Längsachse (34) winklig versetzt sind, vorzugsweise um ungefähr 180° versetzt, und dass der erste und der zweite Exzenterabschnitt (40a, 40b) vorzugsweise fliegend gelagert sind.

8. Oszillationsantrieb (10) nach einem der vorhergehenden Ansprüche, **dadurch gekennzeichnet, dass** der erste und der zweite Exzenterkoppelmechanismus (44a, 44b) zueinander gegenläufig orientiert mit der Antriebswelle (32) gekoppelt sind, und dass dem ersten Exzenterkoppelmechanismus (44a) eine erste Exzentergabel (45a) und dem zweiten Exzenterkoppelmechanismus (44b) eine zweiten Exzentergabel (45b) zugeordnet ist, die beim Umlauf der Antriebswelle (32) gegenläufig verschwenkbar sind.

9. Oszillationsantrieb (10) nach Anspruch 8, **dadurch gekennzeichnet, dass** die erste Exzentergabel (45a) in einer ersten Schwenkebene (48a) und die zweite Exzentergabel (45b) in einer zweiten Schwenkebene (48b) verschwenkbar ist, die zueinander parallel und voneinander beabstandet sind, und dass die erste Schwenkebene (48a) und die zweite Schwenkebene (48b) jeweils im Wesentlichen parallel zur Längsachse (34) und im Wesentlichen senkrecht zur Spindelachse (22) orientiert sind.

10. Oszillationsantrieb (10) nach Anspruch 8 oder 9, **dadurch gekennzeichnet, dass** die zweite Exzentergabel (45b) einen Ausleger (46) aufweist, der einen parallel zur Spindelachse (22) orientierten Versatz bewirkt und an dem eine Koppelfläche (74b) für den zweiten Exzenterabschnitt (40b) vorgesehen ist.

11. Oszillationsantrieb (10) nach einem der vorhergehenden Ansprüche, **dadurch gekennzeichnet, dass** am ersten und am zweiten Exzenterabschnitt (40a, 40b) jeweils ein balliges Lager (42a, 42b) aufgenommen ist, das mit korrespondierenden Koppelflächen (74a, 74b) der ersten oder zweiten Exzentergabel (45a, 45b) zusammenwirkt.

12. Oszillationsantrieb (10) nach einem der vorhergehenden Ansprüche, **dadurch gekennzeichnet, dass** die Spindelachse (22) und die Längsachse (34) im Wesentlichen senkrecht zueinander orientiert sind, und dass die Antriebswelle (32) vorzugsweise als Motorwelle eines Antriebsmotors (30) ausgeführt ist.

13. Oszillationsantrieb (10) nach einem der vorhergehenden Ansprüche, **dadurch gekennzeichnet, dass** der erste und zweite Exzenterkoppelmechanismus (44a, 44b) zum Massenausgleich ausgebildet sind, und dass vorzugsweise die erste und zweite Exzentergabel (45a, 45b) ein aufeinander abgestimmtes Trägheitsmoment aufweisen.

14. Oszillationsantrieb (10) nach einem der vorhergehenden Ansprüche, **dadurch gekennzeichnet, dass** an der Werkzeugspindel (16) ein Werkzeug (18) mit im Wesentlichen runder oder tellerförmiger Grundfläche aufgenommen ist, insbesondere ein Sägewerkzeug oder ein Schleifwerkzeug.

15. Verwendung eines Oszillationsantriebs (10) nach einem der vorhergehenden Ansprüche mit einem Sägewerkzeug oder Schleifwerkzeug mit im Wesentlichen runder oder tellerförmiger Grundfläche zur Bearbeitung eines Werkstücks.

## Claims

1. Oscillatory drive having a housing (12) with a gearhead (14), having a drive shaft (32) which is driveable in rotation about its longitudinal axis (34) and is couplable to a tool spindle (16) in order to drive the latter, **characterized in that** a first eccentric coupling mechanism (44a) and a second eccentric coupling mechanism (44b) are interconnected between the drive shaft (32) and the tool spindle (16), said eccentric coupling mechanisms (44a, 44b) interacting with eccentric sections (40a, 40b), which are offset from one another, of the drive shaft (32), **in that** the first and the second eccentric coupling mechanism (44a; 44b) are configured to drive the tool spindle (16) in a manner pivoting periodically back-and-forth with direction-dependent deflection in order to drive a tool (18) about its spindle axis (22), **in that** the first and the second eccentric coupling mechanism (44a; 44b) are configured to drive the tool spindle (16) with a step characteristic during the rotation of the drive shaft (32), and **in that**, in order to selectively couple the first and the second eccentric coupling mechanism (44a, 44b) to the tool spindle (16), a first freewheel mechanism (52a) and a second freewheel mechanism (52b) are provided.

2. Oscillatory drive (10) according to Claim 1, **characterized in that** the first eccentric coupling mechanism (44a) and the second eccentric coupling mechanism (44b) are configured to drive the tool spindle (16) with a pilger step characteristic during the rotation of the drive shaft (32).

3. Oscillatory drive (10) according to Claim 1 or 2, **characterized in that** at least one of the freewheel mechanisms (52a, 52b) is switchable.

4. Oscillatory drive (10) according to one of the preceding claims, **characterized in that** the freewheel mechanisms (52a, 52b) are accommodated on the tool spindle (16) in a manner axially offset from one another with respect to the spindle axis (22).

5. Oscillatory drive (10) according to one of the preceding claims, **characterized in that** the at least one switchable freewheel mechanism (52a, 52b) is selectively activatable or deactivatable, and **in that** the first or the second eccentric coupling mechanism (44a, 44b) is couplable to the tool spindle (16) preferably in order to be driven in rotation permanently.

6. Oscillatory drive (10) according to one of the preceding claims, **characterized in that** the at least one switchable freewheel mechanism (52a, 52b) allows a change between a driving direction and a freewheel direction.

7. Oscillatory drive (10) according to one of the preceding claims, **characterized in that** the drive shaft (32) has, at its end facing the tool spindle (16), a first and a second eccentric section (40a, 40b) having a circular cross section, which are axially offset from one another along the longitudinal axis (34) and the eccentric axes (80a, 80b) of which are spaced apart in a parallel manner from the longitudinal axis (34) and are angularly offset from one another with respect to the longitudinal axis (34), preferably offset through about 180°, and **in that** the first and the second eccentric section (40a, 40b) are mounted preferably in a floating manner.

8. Oscillatory drive (10) according to one of the preceding claims, **characterized in that** the first and the second eccentric coupling mechanism (44a, 44b) are coupled to the drive shaft (32) in a manner oriented in opposite directions to one another, and **in that** a first eccentric fork (45a) is assigned to the first eccentric coupling mechanism (44a) and a second eccentric fork (45b) is assigned to the second eccentric coupling mechanism (44b), said eccentric forks (45a, 45b) being pivotable in opposite directions during the rotation of the drive shaft (32).

9. Oscillatory drive (10) according to Claim 8, **characterized in that** the first eccentric fork (45a) is pivotable in a first pivoting plane (48a) and the second eccentric fork (45b) is pivotable in a second pivoting plane (48b), said pivoting planes (48a, 48b) being parallel to one another and spaced apart from one another, and **in that** the first pivoting plane (48a) and the second pivoting plane (48b) are each oriented in a manner substantially parallel to the longitudinal axis (34) and in a manner substantially perpendicular to the spindle axis (22).

10. Oscillatory drive (10) according to Claim 8 or 9, **characterized in that** the second eccentric fork (45b) has a side arm (46), which brings about an offset oriented parallel to the spindle axis (22) and on which a coupling surface (74b) for the second eccentric section (40b) is provided.

11. Oscillatory drive (10) according to one of the preceding claims, **characterized in that** a spherical bearing (42a, 42b) is accommodated on each of the first and the second eccentric section (40a, 40b), said spherical bearing (42a, 42b) interacting with corresponding coupling surfaces (74a, 74b) of the first or second eccentric fork (45a, 45b).

12. Oscillatory drive (10) according to one of the preceding claims, **characterized in that** the spindle axis (22) and the longitudinal axis (34) are oriented in a manner substantially perpendicular to one another, and **in that** the drive shaft (32) is embodied preferably as a motor shaft of a drive motor (30).

13. Oscillatory drive (10) according to one of the preceding claims, **characterized in that** the first and second eccentric coupling mechanisms (44a, 44b) are configured for mass balancing, and **in that** preferably the first and second eccentric forks (45a, 45b) have moments of inertia that are coordinated with one another.

14. Oscillatory drive (10) according to one of the preceding claims, **characterized in that** a tool (18) having an essentially round or plate-shaped bottom surface is accommodated on the tool spindle (16), in particular a sawing tool or a sanding tool.

15. Use of an oscillatory drive (10) according to one of the preceding claims with a sawing tool or sanding tool having a substantially round or plate-shaped bottom surface for machining a workpiece.

## Revendications

1. Dispositif d'entraînement oscillant, avec un boîtier (12) avec une tête de transmission (14), avec un arbre d'entraînement (32) pouvant être entraîné en rotation autour de son axe longitudinal (34), lequel peut être accouplé à une broche d'outil (16) en vue de son entraînement, **caractérisé en ce qu'**entre l'arbre d'entraînement (32) et la broche d'outil (16) sont interposés un premier mécanisme d'accouplement excentrique (44a) et un deuxième mécanisme d'accouplement excentrique (44b), lesquels coopèrent avec des portions excentriques décalées l'une par rapport à l'autre (40a, 40b) de l'arbre d'entraînement (32), **en ce que** le premier et le deuxième mécanisme d'accouplement excentrique (44a ; 44b) sont réalisés de manière à entraîner la broche d'outil (16) de manière périodique par pivotement d'avant en arrière avec une déviation dépendant du sens en vue de l'entraînement d'un outil (18) autour de son axe de broche (22), **en ce que** le premier et le deuxième mécanisme d'accouplement excentrique (44a ; 44b) sont réalisés de manière à entraîner la broche d'outil (16) avec une caractéristique de pas lors de la rotation de l'arbre d'entraînement (32), et **en ce que** pour l'accouplement sélectif du premier et du deuxième mécanisme d'accouplement excentrique (44a, 44b) à la broche d'outil (16), un premier mécanisme de roue libre (52a) et un deuxième mécanisme de roue libre (52b) sont prévus.

2. Dispositif d'entraînement oscillant (10) selon la revendication 1, **caractérisé en ce que** le premier mécanisme d'accouplement excentrique (44a) et le deuxième mécanisme d'accouplement excentrique (44b) sont réalisés de manière à entraîner la broche d'outil (16) avec une caractéristique de pas de pèlerin lors de la rotation de l'arbre d'entraînement (32).

3. Dispositif d'entraînement oscillant (10) selon la revendication 1 ou 2, **caractérisé en ce qu'**au moins l'un des mécanismes de roue libre (52a, 52b) peut être commuté.

4. Dispositif d'entraînement oscillant (10) selon l'une quelconque des revendications précédentes, **caractérisé en ce que** les mécanismes de roue libre (52a, 52b) sont reçus au niveau de la broche d'outil (16) de manière décalée axialement l'un par rapport à l'autre par rapport à l'axe de broche (22).

5. Dispositif d'entraînement oscillant (10) selon l'une quelconque des revendications précédentes, **caractérisé en ce que** l'au moins un mécanisme de roue libre commutable (52a, 52b) peut être activé ou désactivé de manière sélective, et **en ce que** le premier ou le deuxième mécanisme d'accouplement excentrique (44a, 44b) peut être accouplé de préférence en vue d'un entraînement en rotation permanent avec la broche d'outil (16).

6. Dispositif d'entraînement oscillant (10) selon l'une quelconque des revendications précédentes, **caractérisé en ce que** l'au moins un mécanisme de roue libre commutable (52a, 52b) permet une commutation entre un sens d'entraînement et un sens de roue libre.

7. Dispositif d'entraînement oscillant (10) selon l'une quelconque des revendications précédentes, **caractérisé en ce que** l'arbre d'entraînement (32) présente, au niveau de son extrémité tournée vers la broche d'outil (16), une première et une deuxième portion excentrique (40a, 40b) de section transversale circulaire, qui sont décalées axialement l'une par rapport à l'autre le long de l'axe longitudinal (34) et dont les axes excentriques (80a, 80b) sont espacés parallèlement de l'axe longitudinal (34) et sont décalés l'un par rapport à l'autre en formant un angle par rapport à l'axe longitudinal (34), de préférence d'environ 180°, et **en ce que** la première et la deuxième portion excentrique (40a, 40b) sont montées de préférence en porte-à-faux.

8. Dispositif d'entraînement oscillant (10) selon l'une quelconque des revendications précédentes, **caractérisé en ce que** le premier et le deuxième mécanisme d'accouplement excentrique (44a, 44b) sont accouplés à l'arbre d'entraînement (32) de manière orientée en sens inverse l'un par rapport à l'autre, et **en ce qu'**une première fourche excentrique (45a) est associée au premier mécanisme d'accouplement excentrique (44a) et une deuxième fourche excentrique (45b) est associée au deuxième mécanisme d'accouplement excentrique (44b), lesquelles fourches excentriques peuvent pivoter en sens inverse lors de la rotation de l'arbre d'entraînement (32).

9. Dispositif d'entraînement oscillant (10) selon la revendication 8, **caractérisé en ce que** la première fourche excentrique (45a) peut pivoter dans un premier plan de pivotement (48a) et la deuxième fourche excentrique (45b) peut pivoter dans un deuxième plan de pivotement (48b), lesquels sont parallèles et espacés l'un de l'autre, et **en ce que** le premier plan de pivotement (48a) et le deuxième plan de pivotement (48b) sont chacun orientés essentiellement parallèlement à l'axe longitudinal (34) et essentiellement perpendiculairement à l'axe de broche (22).

10. Dispositif d'entraînement oscillant (10) selon la revendication 8 ou 9, **caractérisé en ce que** la deuxième fourche excentrique (45b) présente un bras de potence (46), lequel produit un décalage orienté parallèlement à l'axe de broche (22) et au niveau duquel est prévue une surface d'accouplement (74b) pour la deuxième portion excentrique (40b).

11. Dispositif d'entraînement oscillant (10) selon l'une quelconque des revendications précédentes, **caractérisé en ce qu'**un palier sphérique (42a, 42b) est à chaque fois reçu au niveau de la première et de la deuxième portion excentrique (40a, 40b), lequel palier coopère avec des surfaces d'accouplement correspondantes (74a, 74b) de la première ou de la deuxième fourche excentrique (45a, 45b).

12. Dispositif d'entraînement oscillant (10) selon l'une quelconque des revendications précédentes, **caractérisé en ce que** l'axe de broche (22) et l'axe longitudinal (34) sont orientés essentiellement perpendiculairement l'un à l'autre et **en ce que** l'arbre d'entraînement (32) est réalisé de préférence sous forme d'arbre de moteur d'un moteur d'entraînement (30).

13. Dispositif d'entraînement oscillant (10) selon l'une quelconque des revendications précédentes, **caractérisé en ce que** le premier et le deuxième mécanisme d'accouplement excentrique (44a, 44b) sont réalisés en vue d'un équilibrage de masse, et **en ce que** de préférence la première et la deuxième fourche excentrique (45a, 45b) présentent un couple d'inertie mutuellement ajusté.

14. Dispositif d'entraînement oscillant (10) selon l'une quelconque des revendications précédentes, **caractérisé en ce qu'**un outil (18) est reçu au niveau de la broche d'outil (16) avec une surface de base essentiellement circulaire ou en forme de plateau, en particulier un outil de sciage ou un outil de meulage.

15. Utilisation d'un dispositif d'entraînement oscillant (10) selon l'une quelconque des revendications précédentes, comprenant un outil de sciage ou un outil de meulage avec une surface de base essentiellement circulaire ou en forme de plateau pour l'usinage d'une pièce.
